# EUROPEAN PATENT APPLICATION

(11) **EP 3 660 777 A1**
(43) Date of publication of application: **03.06.2020**
(21) Application number: 19211822.2
(22) Date of filing: 27.11.2019
(51) Int. Cl.: G06Q 50/06

(54) **ELECTRIC POWER TRADE APPARATUS AND METHOD**

(30) Priority: 29.11.2018 JP 2018223957
(71) Applicant: FUJITSU LIMITED, Kanagawa 211-8588 (JP)
(72) Inventor: Kozakura, Fumihiko, Kanagawa, 211-8588 (JP); Fujimoto, Shingo, Kanagawa, 211-8588 (JP)
(74) Representative: Hoffmann Eitle

(57) **Abstract**

An electric power trade apparatus comprising a determination unit for determining whether it is possible to make a purchase concerning a purchase amount indicated in one or more purchase requests received from one or more respective purchasers of electric power having received a power-saving request, on the basis of the purchase amount and a sellable amount indicated in one or more sale requests received from one or more respective sellers of electric power, upon receiving the purchase requests, an output unit for transmitting information for enabling any given one of the purchasers to make a reply to the power-saving request upon determining that purchase concerning a corresponding one of the purchase requests is possible, and an allocation unit for allocating, to the one or more sale requests, respective sale amounts a sum of which is equal to the purchase amount, on the basis of the purchase amount and the sellable amount after the information is transmitted.

## Description

### FIELD

The disclosures herein relate to an electric power trade apparatus, an electric power trade method, and a program.

### BACKGROUND

In demand response (DR) trade for preventing failure of a power grid by giving power-saving requests to consumers in a case of electric power shortage, consumers reply as to whether power-saving target can be achieved by a DR reply deadline in response to the power-saving request from an aggregator. A consumer who accepts the power-saving request not only stops devices such as air conditioners but also achieves apparent power-saving by activating private power generators as means for achieving the power-saving target.

Since the remuneration amount of DR trade is high, consumers receive great benefit in joining the DR trade. However, if the power-saving target is not reached even by the slightest amount, the consumer cannot receive the remuneration at all. Therefore, the consumers who receive power-saving requests wish to make sure that the electric power can be secured by the DR reply deadline.

In DR trade, it may be difficult to determine whether or not the electric power can be secured by the DR reply deadline. In such case, even if the electric power can be consequently secured, the consumer has no choice but to give up accepting the power-saving request.

### [Related-Art Documents]

### [Patent Document]

[Patent Document 1] Japanese Laid-Open Patent Publication No. 2014-127107
[Patent Document 2] Japanese Laid-Open Patent Publication No. 2008-65617
[Patent Document 3] Japanese Laid-Open Patent Publication No. 2004-192473
[Patent Document 4] Japanese Laid-Open Patent Publication No. 2018-78702

### SUMMARY

It is an object to achieve smooth operation of electric power trades according to power-saving requests.

According to an aspect of the embodiment, an electric power trade apparatus comprising: a memory; and a processor coupled to the memory and configured to perform: determining whether it is possible to make a purchase concerning a purchase amount indicated in one or more purchase requests received from one or more respective purchasers of electric power having received a power-saving request, on the basis of the purchase amount and a sellable amount indicated in one or more sale requests received from one or more respective sellers of electric power, upon receiving the purchase requests; transmitting information for enabling any given one of the purchasers to make a reply to the power-saving request upon determining that purchase concerning a corresponding one of the purchase requests is possible; and allocating, to the one or more sale requests, respective sale amounts a sum of which is equal to the purchase amount, on the basis of the purchase amount and the sellable amount after the information is transmitted.

According to at least one embodiment, smooth operation of electric power trades is achieved according to power-saving requests.

### BRIEF DESCRIPTION OF DRAWINGS

Fig. 1 is a drawing illustrating an amount of shortage for a power-saving request that is supplemented through peer-to-peer (P2P) electric power trade;
Fig. 2 is a drawing illustrating a system configuration example according to the embodiment of the disclosure;
Fig. 3 is a drawing illustrating a hardware configuration example of a matching device 10 according to the embodiment of the disclosure;
Fig. 4 is a drawing illustrating a functional configuration example of the matching device 10 according to the embodiment of the disclosure;
Fig. 5 is a drawing illustrating a chronological order of requests from consumers and processing performed with the matching device 10;
Fig. 6 is a flowchart for explaining an example of processing procedure of purchase confirmation determination processing;
Fig. 7 is a drawing illustrating a configuration example of buy information in a block chain BC;
Fig. 8 is a drawing illustrating a configuration example of sell information in the block chain BC;
Fig. 9 is a drawing illustrating a configuration example of purchase confirmation information in the block chain BC;
Fig. 10 is a drawing illustrating a configuration example of sale confirmation information in the block chain BC;
Figs. 11A and 11B are first drawings illustrating a data example of sell information and buy information, respectively, loaded to a memory;
Fig. 12 is a flowchart for explaining an example of processing procedure of sale confirmation determination processing;
Figs. 13A and 13B are second drawings illustrating a data example of sell information and buy information, respectively, loaded to the memory;
Figs. 14A and 14B are third drawings illustrating a data example of buy information and sell information loaded to the memory;
Fig. 15 is a flowchart for explaining an example of processing procedure of contract confirmation processing;
Fig. 16 is a drawing illustrating an example of a matching result of sells and buys;
Fig. 17 is a drawing illustrating a configuration example of contract information in the block chain BC; and
Fig. 18 is a drawing for explaining an example of confirmation processing of a contract in a case where a matching is made by a reply deadline.

### DESCRIPTION OF EMBODIMENT

In the following, an embodiment of the present invention will be described with reference to the accompanying drawings.

In these drawings, the same or corresponding elements are referred to by the same or corresponding numerals, and a description thereof will be omitted as appropriate.

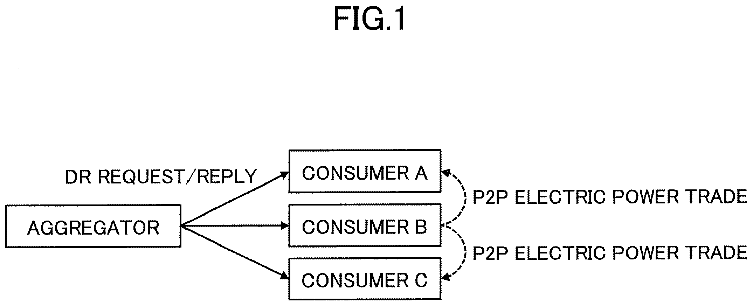

In the present embodiment, even in a case where a consumer who accepts a power-saving request (DR request) for demand response (DR) trade cannot achieve a power-saving target alone, the power-saving target can be more easily achieved by supplementing electric power through peer-to-peer (P2P) electric power trade with other consumers as illustrated in Fig. 1. In Fig. 1, a consumer A and a consumer C who received a power-saving request supplement the shortage through P2P electric power trade with a consumer B.

Since P2P electric power trade is a direct trade between untrusted individuals, management of contract describing the trade content is important. Accordingly, in the present embodiment, a contract of P2P electric power trade in the DR trade is recorded in a block chain. Recording the contract in the block chain makes it difficult to tamper with the contract, and allows the trade to be conducted with trust in the contract.

More specifically, a seller of electric power in P2P electric power trade records information indicating a sale request of electric power (hereinafter referred to as "sell information") into a block chain, and an electric power purchaser records information indicating a purchase request of electric power (hereinafter referred to as "buy information") into the block chain. For electric power trade, a broker of P2P electric power trade determines correspondence (matching) between sells and buys from among a plurality of pieces of sell information and buy information, and records the results thereof as contracts into the block chain. At a point in time when the contract is recorded, the contract becomes effective, and the seller provides electric power to the purchaser, and the purchaser receives electric power from the seller.

In this case, the purchasers of electric power wish to confirm that the electric power is secured by the DR reply deadline (reply deadline in response to a power-saving request) in order to reply to the power-saving request (hereinafter referred to as "power-saving request reply"). On the other hand, the sellers of electric power wish to delay the confirmations of trades in order to sell more electric power by finding more suitable buyers, and so do the brokers in order to handle more trades. In the present embodiment, the limitation within which such delay is allowed is defined as a "trade deadline". Here, it is difficult to achieve both of efficient trades and securing of electric power in a short time in which a power-saving request reply is required in P2P electric power trades.

The reason why it is difficult to achieve both is that efficient trades and securing of electric power before the power-saving request reply have a tradeoff relationship. The electric power output includes a maximum output and minimum output. Since the output of electric power below the minimum output becomes unstable, the electric power is not provided at below the minimum output. For efficient trades, it is desired to match as many purchase requests and sale requests as possible. For this reason, it is efficient to wait for receipts of sale requests and purchase requests by the trade deadline. On the other hand, in order to secure the electric power before the power-saving request reply, a consumer desires to secure the electric power for the amount of requested power-saving before the deadline in order to make a power-saving request reply before the deadline. For this reason, an early trade confirmation is desired, and it is difficult to achieve both of securing of electric power before the power-saving request reply and efficient trades.

Accordingly, in the present embodiment, with regard to matching between buy information and sell information, the matching device 10 records information to a block chain in three stages in the chronological order. Information recorded in the first stage is information indicating confirmation of a purchase for each piece of buy information (hereinafter referred to as "purchase confirmation information"). Information recorded in the second stage is information (hereinafter referred to as "sale confirmation information") indicating confirmation of a sell for each piece of sell information. Information recorded in the third stage is information indicating a matching result between buy information and sell information.

Since information about matching is divided into three stages, the purchase of electric power concerning buy information is confirmed to allow replies to the power-saving request at the timing of the first stage. In the second stage, sells concerning sell information are confirmed to allow selling of electric power. In the third stage, optimum matching between buy information and sell information is actually made.

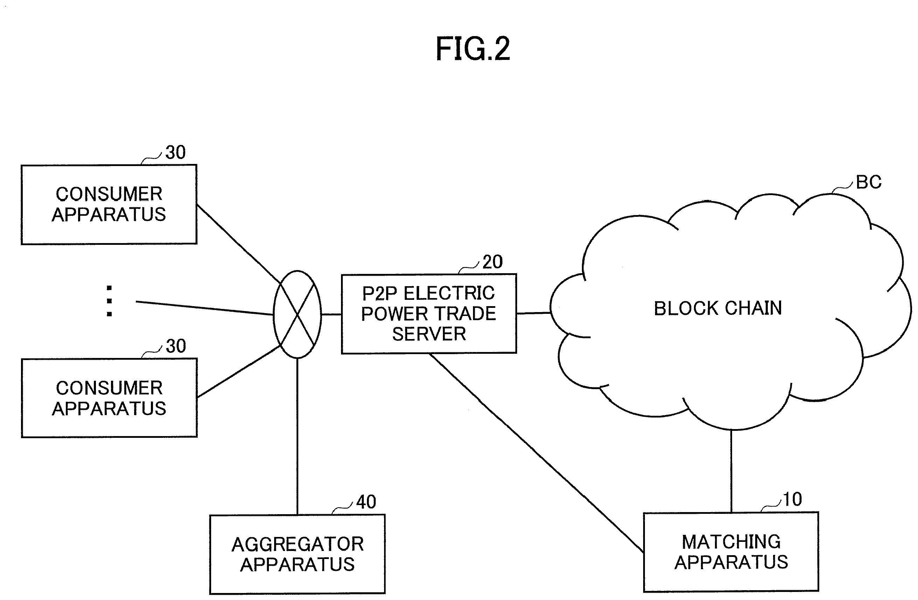

Fig. 2 is a drawing illustrating a system configuration example according to the embodiment of the disclosure. In Fig. 2, multiple consumer devices 30 are connected to a P2P electric power trade server 20 via a network such as the Internet. The P2P electric power trade server 20 is connected to a block chain BC via the network such as the Internet. The matching device 10 is connected to the block chain BC and the P2P electric power trade server 20 via the network such as the Internet. The aggregator device 40 is connected to each consumer device 30 and the P2P electric power trade server 20 via the network such as the Internet.

Each consumer device 30 is a computer used by a consumer who conducts demand response (DR) trade. As described above, the P2P electric power trades are conducted among consumers in order to satisfy the power-saving request in the DR trade. A consumer device 30 of a consumer who becomes a purchaser of electric power in the P2P electric power trade transmits buy information indicating a purchase request of electric power to the P2P electric power trade server 20. A consumer device 30 of a consumer who becomes a seller of electric power transmits sell information indicating a sale request of electric power to the P2P electric power trade server 20. The buy information includes the amount of electric energy to be purchased (hereinafter referred to as "buy amount") and the like. The sell information includes the amount of minimum electric energy that can be sold (hereinafter referred to as "minimum sell amount"), the amount of maximum electric energy that can be sold (hereinafter referred to as "maximum sell amount"), and the like. Hereinafter, when the minimum sell amount and the maximum sell amount are not distinguished from each other, the minimum sell amount and the maximum sell amount are referred to as "sellable amount".

The P2P electric power trade server 20 is one or more computers that mediate P2P electric power trade. When the P2P electric power trade server 20 receives buy information or sell information transmitted from any given consumer device 30, the P2P electric power trade server 20 registers the received information into the block chain BC.

The matching device 10 makes matching between buy information and sell information registered in the block chain BC, and registers information generated from the matching (purchase confirmation information, sale confirmation information, and contract information, which will be explained later) into the block chain BC. The functions of the matching device 10 may be provided in a smart contract and the like of the block chain BC. However, when the matching device 10 is arranged outside of the block chain BC as illustrated in Fig. 2, an optimization algorithm of matching can be easily changed according to environmental change.

The aggregator device 40 is one or more computers that function as an aggregator in the DR trade. The aggregator device 40 transmits a power-saving request to each consumer device 30, and receives a reply to the power-saving request from each consumer device 30. In addition, the aggregator device 40 evaluates authenticity of a reply to the power-saving request from each consumer device 30 by referring to information recorded in the block chain BC with regard to the P2P electric power trade.

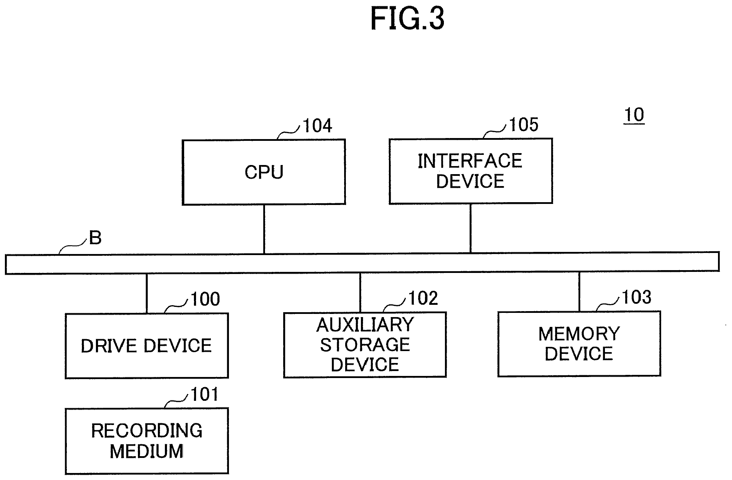

Fig. 3 is a drawing illustrating a hardware configuration example of the matching device 10 according to the embodiment of the disclosure. The matching device 10 of Fig. 3 includes a drive device 100, an auxiliary storage device 102, a memory device 103, a CPU 104, and an interface device 105, and the like, which are connected with each other via a bus B.

A program for implementing processing on the matching device 10 is provided by the recording medium 101. When the recording medium 101 recorded with the program is set in the drive device 100, the program is installed from the recording medium 101 to the auxiliary storage device 102 via the drive device 100. However, installation of the program may not be necessarily done with the recording medium 101, and the program may be downloaded from another computer via the network. The auxiliary storage device 102 stores the installed program and stores files, data and the like as necessary.

When an instruction for activating the program is given, the memory device 103 reads and stores the program from the auxiliary storage device 102. The CPU 104 executes the function concerning the matching device 10 according to the program stored in the memory device 103. The interface device 105 is used as an interface for connecting to the network.

Examples of recording media 101 include portable recording media such as a CD-ROM, a DVD disk, or a USB memory. Examples of auxiliary storage devices 102 include a hard disk drive (HDD) a flash memory, or the like. Each of the recording medium 101 and the auxiliary storage device 102 corresponds to a computer-readable recording medium.

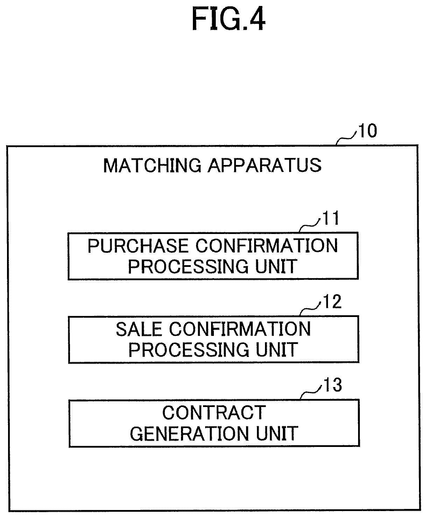

Fig. 4 is a drawing illustrating a functional configuration example of the matching device 10 according to the embodiment of the disclosure. As illustrated in Fig. 4, the matching device 10 includes a purchase confirmation processing unit 11, a sale confirmation processing unit 12, and a contract generation unit 13, which respectively correspond to the three stages explained above. Each of these units is implemented with processing which one or more programs installed on the matching device 10 cause the CPU 104 to execute.

The purchase confirmation processing unit 11 determines whether electric power for a buy amount in buy information can be purchased or not, on the basis of the buy amount indicated in buy information (purchase amount) and sellable amount indicated in each piece of sell information. With regard to buy information of which purchase is possible, the purchase confirmation processing unit 11 records information for enabling the purchaser to make a reply to the power-saving request (more specifically, information indicating that a purchase concerning the buy information is possible (i.e., purchase confirmation information concerning the buy information)) into the block chain BC.

After the purchase confirmation information is recorded, the sale confirmation processing unit 12 allocates (distributes) a sale amount (actual sell amount) according to the buy amount to each piece of sell information, on the basis of the buy amount of buy information concerning the purchase confirmation information (buy information of which purchase has been confirmed) and the sellable amount indicated in each piece of sell information. The sale confirmation processing unit 12 records, into the block chain BC, sale confirmation information concerning the sell information of which an actual sell amount is allocated.

The contract generation unit 13 makes matching (association) between buy information of which purchase has been confirmed and sell information of which sell has been confirmed, and creates data indicative of the matches made. The contract generation unit 13 allocates electric power on the basis of closeness of power distribution between sell information and buy information, and records information indicating a contract regarding selling and buying of electric power in the P2P trade (hereinafter referred to as "contract information") into the block chain BC.

The second and third stages in the above explanation may be combined, resulting in two stages in total. In this case, the sale confirmation information may not be recorded to the block chain BC.

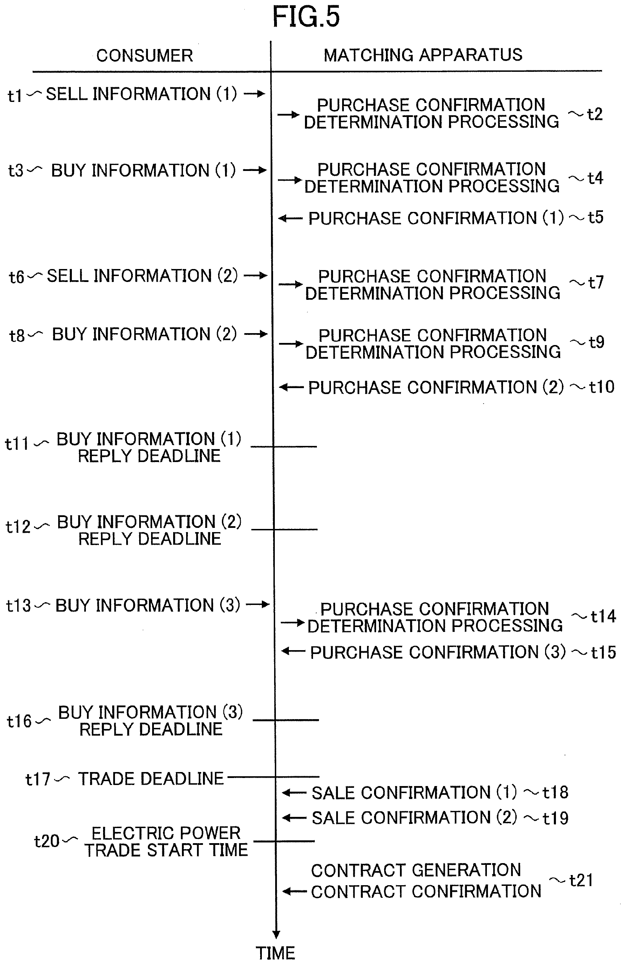

Hereinafter, the present embodiment will be explained based on an example where requests from consumers (i.e., sale request (sell information) and purchase request (buy information)) and various kinds of processing performed by the matching device 10 occur in the order as illustrated in Fig. 5. In Fig. 5, "x" of reference symbol "tx" attached to each request or each processing represents a number in sequence for the request or the processing. More specifically, a smaller value of x represents an event that occurs earlier. The content of Fig. 5 will be explained together with the explanation about the processing procedure.

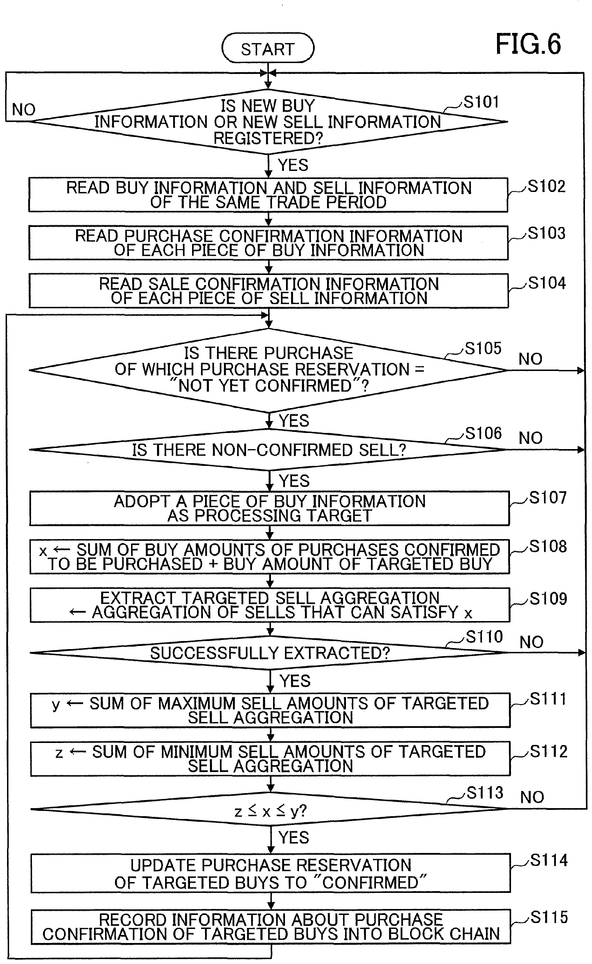

Hereinafter, the processing procedure executed by the matching device 10 will be explained. Fig. 6 is a flowchart for explaining an example of processing procedure of purchase confirmation determination processing.

The purchase confirmation processing unit 11 waits for recording (registering) of new buy information or new sell information into the block chain BC (S101). When new buy information or new sell information is recorded into the block chain BC (Yes in S101), the purchase confirmation processing unit 11 reads from the block chain BC buy information and sell information in the same trade period as the new buy information or the new sell information (S102).

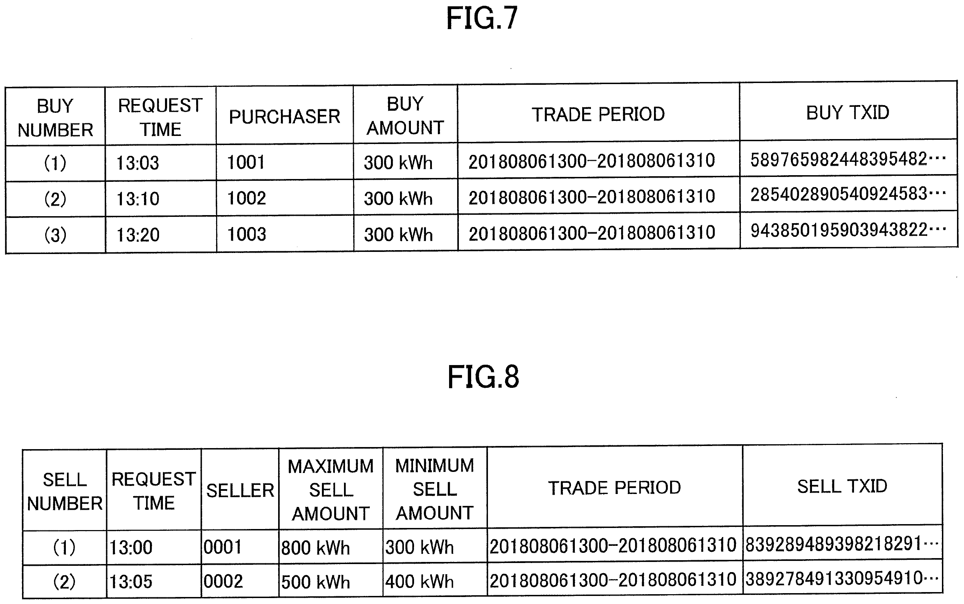

Fig. 7 is a drawing illustrating a configuration example of buy information in the block chain BC. In Fig. 7, one row (record) indicates a piece of buy information. As illustrated in Fig. 7, one piece of buy information includes a request time, a purchaser, a buy amount, a trade period, a purchase TXID, and the like.

The request time is a start time of a transaction at which buy information is stored into the block chain BC. The purchaser is an ID of a consumer corresponding to the purchaser concerning the buy information. The buy amount is the amount of electric energy which the purchaser wishes to purchase. The trade period is a period in which the electric power for the amount of electric energy is required. The purchase TXID is an ID of a transaction concerning the buy information in the block chain BC. It should be noted that the purchase number is given for the sake of convenience in explanation in order to clarify correspondence with the purchase request (buy information) in Fig. 5. This is also applicable to the purchase confirmation information explained later. Hereinafter, when each piece of buy information is distinguished from each other, a purchase number is given subsequent to "buy information".

Fig. 8 is a drawing illustrating a configuration example of sell information in the block chain BC. In Fig. 8, one row (record) indicates a piece of sell information. As illustrated in Fig. 8, a piece of sell information includes a request time, a seller, a maximum sell amount, a minimum sell amount, a trade period, a sell TXID, and the like.

The request time is a start time of a transaction at which sell information is stored into the block chain BC. The seller is an ID of a consumer corresponding to the seller concerning the sell information. The maximum sell amount is the amount of maximum electric energy that can be sold. The minimum sell amount is the amount of minimum electric energy that can be sold. The trade period is a period in which the electric power can be sold for the sellable amount. The sell TXID is an ID of a transaction concerning the sell information in the block chain BC. It should be noted that the sell number is given for the sake of convenience in explanation in order to clarify correspondence with the sale request (sell information) in Fig. 5. This is also applicable to the sale confirmation information explained later. Hereinafter, when each piece of sell information is distinguished from each other, a sell number is given subsequent to "sell information".

Subsequently, the purchase confirmation processing unit 11 reads from the block chain BC purchase confirmation information corresponding to each piece of buy information read in step S102 (S103).

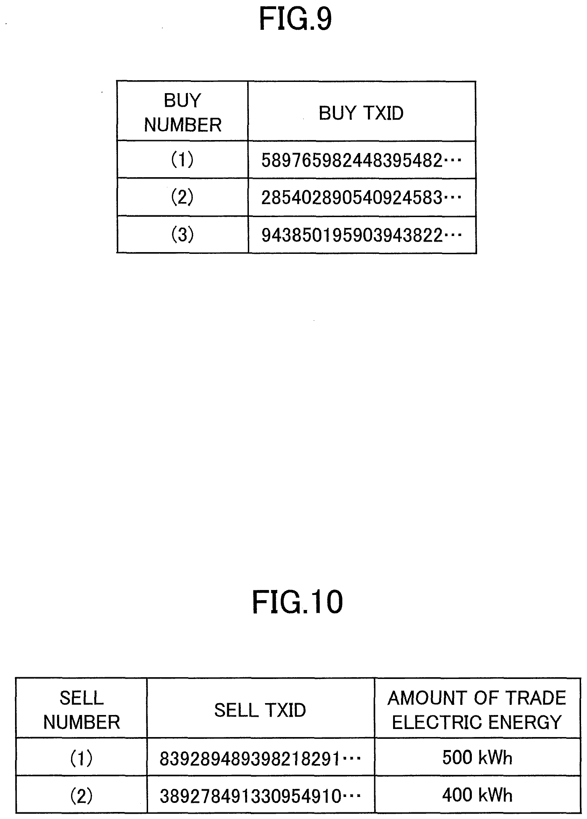

Fig. 9 is a drawing illustrating a configuration example of purchase confirmation information in the block chain BC. In Fig. 9, one row (record) indicates a piece of purchase confirmation information. As illustrated in Fig. 9, one piece of purchase confirmation information includes the purchase TXID of the buy information of which purchase has been confirmed.

Subsequently, the purchase confirmation processing unit 11 reads from the block chain BC sale confirmation information corresponding to each piece of sell information read in step S102 (S104).

Fig. 10 is a drawing illustrating a configuration example of sale confirmation information in the block chain BC. In Fig. 10, one row (record) indicates a piece of sale confirmation information. As illustrated in Fig. 10, one piece of sale confirmation information includes the sell TXID of the sell information of which sell has been confirmed, and an amount of trade electric energy. The amount of trade electric energy is the amount of electric energy in the sellable amount that has been confirmed to be actually sold.

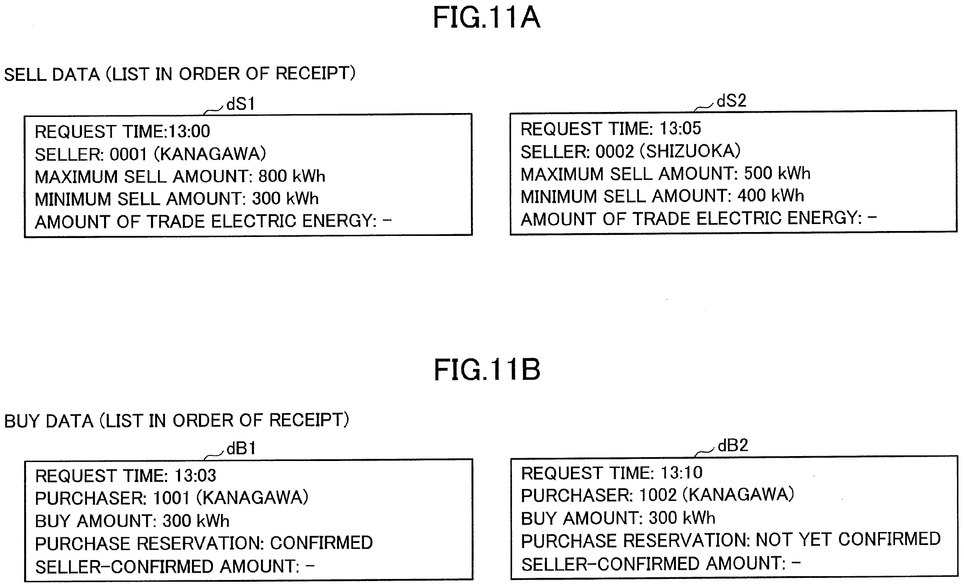

In this case, it is assumed that step S102 and subsequent steps are executed in response to recording of buy information (2) in the block chain BC at time t8 of Fig. 5 (in response to transmission of the buy information (2) from the consumer). In other words, a situation is assumed in which buy information (1) in Fig. 7 and sell information (1) and sell information (2) in Fig. 8 are already recorded in the block chain BC, and the buy information (2) is newly recorded to block chain BC. Therefore, at time t5 in Fig. 5, the buy information (1) is confirmed, but the sell information (1) and the sell information (2) are not confirmed. In other words, the purchase confirmation information corresponding to the buy information (1) is recorded in the block chain BC at time t5, but the sale confirmation information corresponding to each of the sell information (1) and the sell information (2) is not recorded in the block chain BC. Therefore, the purchase confirmation processing unit 11 generates data as illustrated in Figs. 11A and 11B in the memory device 103, on the basis of information read in steps S102 to S104.

Figs. 11A and 11B are first drawings illustrating a data example of sell information and buy information, respectively, loaded to a memory. In Fig. 11A, the sell data dS1 corresponds to the sell information (1), and the sell data dS2 corresponds to the sell information (2). In Fig. 11B, the buy data dB1 corresponds to the buy information (1), and the buy data dB2 corresponds to the buy information (2).

The sell data includes sell information and "amount of trade electric energy". The "amount of trade electric energy" is "amount of trade electric energy" in the sale confirmation information corresponding to the sell information. In this case, sell is not confirmed (the sale confirmation information is not recorded into the block chain BC) in any of the sell information (1) and (2), and therefore, the value of amount of trade electric energy is blank in either of the sell data dS1 and dS2.

The buy data includes buy information, "purchase reservation", and "seller-confirmed amount". The "purchase reservation" is an item indicating whether the buy information has been confirmed or not. "Confirmed" indicates that the buy information has been confirmed, and "not yet confirmed" indicates that the buy information has not yet been confirmed. Here, in the buy information (1), the buy information has been confirmed (purchase confirmation information is recorded in the block chain BC), and accordingly, the purchase reservation of the buy data dB1 is "confirmed". The "seller-confirmed amount" is an item recording electric energy of which seller, from which electric power is purchased, has been confirmed (with which matching has been made).

In the item of the seller of each sell data illustrated in Fig. 11A and the item of the purchaser of each buy data illustrated in Fig. 11B, the location of each seller or each purchaser is indicated within parentheses. For example, the location may be acquired from attribute information of each consumer stored in the P2P electric power trade server 20. In the present embodiment, the location is expressed by a prefecture for the sake of convenience, but may also be expressed in other formats such as administrative districts, and latitudes and longitudes.

Subsequently, the purchase confirmation processing unit 11 determines whether there is any buy data of which value of purchase reservation is "not yet confirmed" (S105) . In a case where there is no applicable buy data (No in S105), the purchase confirmation processing unit 11 returns back to step S101. When there is applicable buy data (hereinafter referred to as "candidate buy data group") (Yes in S105), the purchase confirmation processing unit 11 determines whether there is any sell data that is not yet confirmed (i.e., no value is recorded in the amount of trade electric energy) (S106). In a case where there is no applicable sell data (No in S106), the purchase confirmation processing unit 11 returns back to step S101. In a case where there is applicable sell data (hereinafter referred to as "candidate sell data group") (Yes in S106), the purchase confirmation processing unit 11 proceeds to step S107.

In Fig. 5, at time t1, step S105 yields "No", which means that there is no buy information of which purchase is to be confirmed in the purchase confirmation determination processing at time t2.

In step S107, the purchase confirmation processing unit 11 selects, as a processing target, a first piece of buy data in the order of receipt from the candidate buy data group. In the example of Figs. 11A and 11B, the buy data dB2 is adopted as the processing target (hereinafter referred to as "targeted buy data").

Subsequently, the purchase confirmation processing unit 11 substitutes into a variable x a result obtained by adding the buy amount of the targeted buy data to the sum of buy amounts of buy data of which purchase reservations have been made (of which value of the purchase reservation is "confirmed") (S108). In the example of Figs. 11A and 11B, the buy amount of the buy data dB1 of which purchase reservation has been made is 300kWh, and the buy amount of the targeted buy data (buy data dB2) is 300kWh. Therefore, 300 kWh + 300 kWh = 600 kWh is substituted into the variable x.

Subsequently, the purchase confirmation processing unit 11 extracts sell data that can satisfy the buy amount indicated by the variable x in the order of receipt from the candidate sell data group (S109). Hereinafter, an aggregation of one or more pieces of extracted sell data will be referred to as "targeted sell aggregation". More specifically, the purchase confirmation processing unit 11 extracts sell data in the order of receipt from the candidate sell data group until the sum of the maximum sell amounts is equal to or more than x. In the example of Figs. 11A and 11B, the maximum sell amount (800kWh) of the first sell data dS1 is equal to or more than x (600kh). Therefore, the sell data dS1 becomes an element of the targeted sell aggregation.

In a case where the targeted sell aggregation (i.e., sell data that can satisfy the buy amount indicated by the variable x) could not be extracted (No in S110), the purchase confirmation processing unit 11 returns back to step S101. In a case where the targeted sell aggregation has been successfully extracted (Yes in S110), the purchase confirmation processing unit 11 substitutes into a variable y a sum of maximum sell amounts of sell data included in the targeted sell aggregation (Sill). In the example of Figs. 11A and 11B, 800kWh which is the maximum sell amount of the sell data dS1 is substituted into the variable y.

Subsequently, the purchase confirmation processing unit 11 substitutes into a variable z a sum of minimum sell amounts of sell data included in the targeted sell aggregation (S112). In the example of Figs. 11A and 11B, 300kWh which is the minimum sell amount of the sell data dS1 is substituted into the variable z.

Subsequently, the purchase confirmation processing unit 11 determines whether a condition that the value of x is equal to or more than z and equal to or less than y (hereinafter referred to as "purchase confirmation condition") is satisfied or not (S113) . In a case where the purchase confirmation condition is not satisfied (No in S113), the purchase confirmation processing unit 11 returns back to step S101. In a case where the purchase confirmation condition is satisfied (Yes in S113), the purchase confirmation processing unit 11 updates the purchase reservation of the targeted buy data from "not yet confirmed" to "confirmed" (S114). Subsequently, the purchase confirmation processing unit 11 records the purchase confirmation information corresponding to the targeted buy data into the block chain BC (S115).

In the example of Figs. 11A and 11B, the value of x (600 kWh) is equal to or more than z (300 kWh) and equal to or less than y (800 kWh). Therefore, the purchase confirmation information corresponding to the buy data dB2 is recorded into the block chain BC. It should be noted that the recording of the purchase confirmation information corresponds to the purchase confirmation (2) at time t10 in Fig. 5. The purchase confirmation information also corresponds to the purchase confirmation information of which purchase number is (2) in Fig. 9. It should be noted that in Fig. 5, the purchase confirmation (2) at time t10 is made before time t12 which is the reply deadline of the buy information (2).

Subsequently to step S115, the purchase confirmation processing unit 11 returns back to step S105. When the purchase confirmation processing unit 11 returns back to step S105, the purchase confirmation processing unit 11 executes step S105 and subsequent steps with regard to the buy data of which request time is later than the targeted buy data.

It should be noted that the P2P electric power trade server 20 periodically checks recording of the new purchase confirmation information into the block chain BC. When new purchase confirmation information is recorded, the P2P electric power trade server 20 transmits a confirmation notification of purchase to the consumer device 30 which has transmitted the buy information corresponding to the purchase confirmation information. Upon reception of the confirmation notification, the consumer concerning the consumer device 30 is allowed to make a reply (DR reply) in response to the power-saving request. Therefore, recording of purchase confirmation information into the block chain BC corresponds to an example of transmission of information for enabling a consumer who is a purchaser to make a reply to the power-saving request (information indicating that a purchase concerning the buy information from the purchaser is possible).

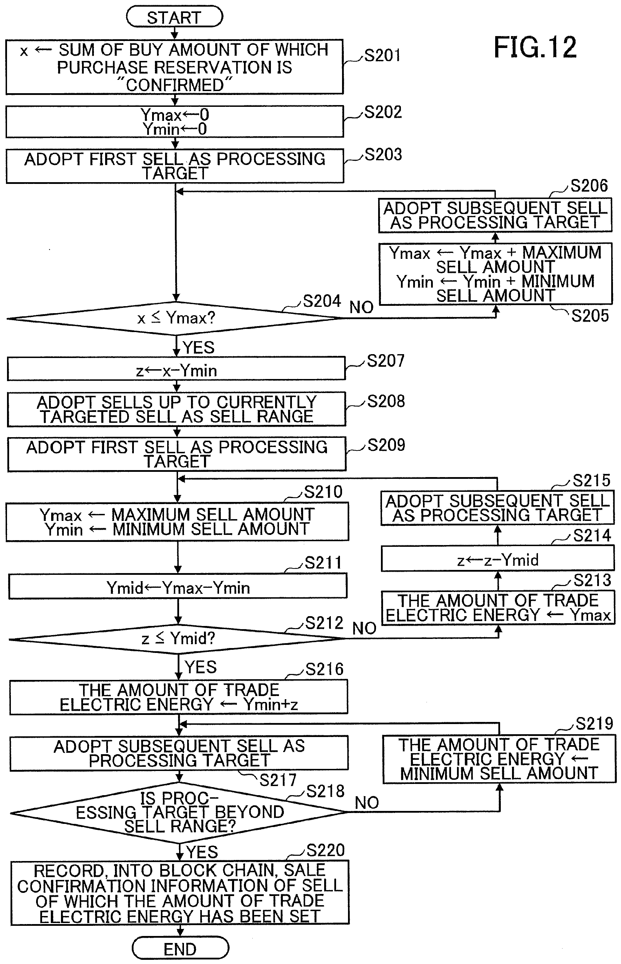

Fig. 12 is a flowchart for explaining an example of processing procedure of sale confirmation determination processing. The processing procedure of Fig. 12 is executed after the trade deadline of a buy information group and a sell information group of which trade periods are the same. More specifically, the trade deadline is set for the buy information group and the sell information group of which trade periods are the same. The trade deadline is, for example, the start time of the trade period - α. The value α is any given length of time. For example, the value α may be a length of time it takes for the sale confirmation processing unit 12 to execute the sale confirmation determination processing. In other words, the processing procedure of Fig. 12 may be executed by around a time so as not to be late for the start of the trade, and may be executed after the reply deadline of each piece of buy information. In the example of Fig. 5, the trade deadline is time t17.

In step S201, the sale confirmation processing unit 12 substitutes into the variable x a sum of buy amounts of buy data of which purchase reservation is "confirmed" (hereinafter referred to as "purchase summation") in the buy data group concerning the buy information group in which the trade periods are the same.

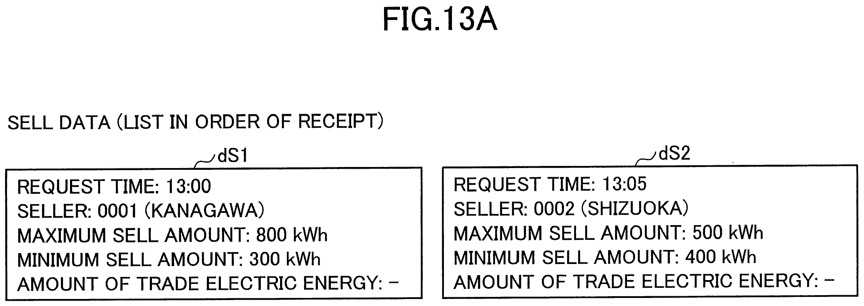

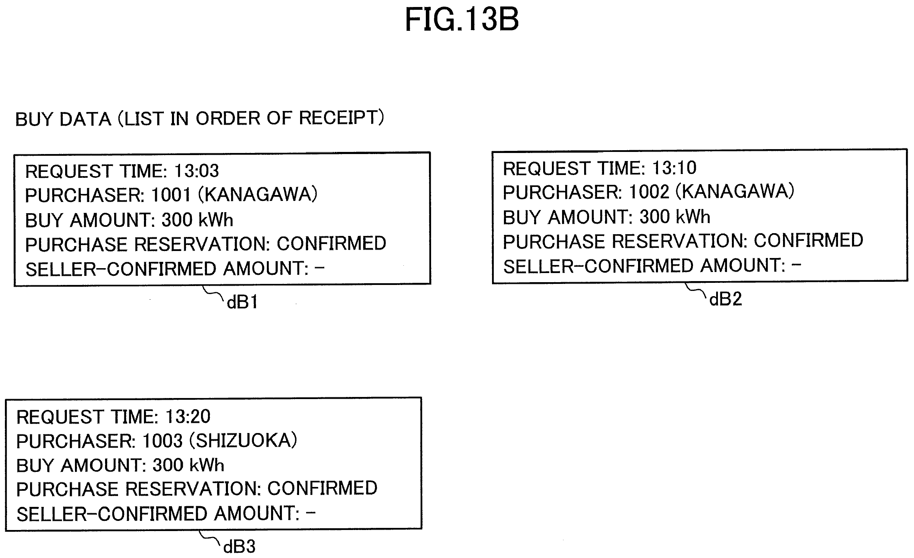

Here, time t17 is assumed. Accordingly, the sell data as illustrated in Fig. 13A and the buy data as illustrated in Figs. 13B are loaded into the memory device 103.

Figs. 13A and 13B are second drawings illustrating a data example of sell information and buy information, respectively, loaded to the memory. In Figs. 13A and 13B, the same portions as those in Figs. 11A and 11B are denoted with the same reference symbols, and description thereabout is omitted. In Figs. 13A and 13B, buy data dB3 is further added, and the purchase reservation of the buy data dB3 is "confirmed". The addition of the buy data dB3 is done at time t14 in Fig. 5, and the change of the purchase reservation of the buy data dB3 to "confirmed" is done at time t15 in Fig. 5.

Therefore, in the example of Figs. 13A and 13B, x is 300 kWh + 300 kWh + 300 kWh = 900 kWh.

Subsequently, in step S202 and subsequent steps, the sale confirmation processing unit 12 executes processing for identifying sell data of which amount of trade electric energy for the purchase summation x is allocated and the amount of trade electric energy of each piece of sell data.

Subsequently, the sale confirmation processing unit 12 substitutes 0 into each of variable Ymax and Ymin (S202). The variable Ymax is a variable for storing a sum of maximum sell amounts of sell data of which amount of trade electric energy for the purchase summation x is allocated. The variable Ymin is a variable for storing a sum of minimum sell amounts of sell data of which amount of trade electric energy for the purchase summation x is allocated.

Subsequently, the sale confirmation processing unit 12 adopts, as a processing target (hereinafter referred to as "targeted sell data"), the first sell data in the sell data group in which the trade periods are the same (hereinafter referred to as "candidate sell data group") (S203).

Subsequently, the sale confirmation processing unit 12 determines whether Ymax is equal to or more than x (S204). In other words, a determination is made as to whether a sum of maximum sell amounts is equal to or more than the purchase summation x. In a case where Ymax is less than x (No in S204), the sale confirmation processing unit 12 substitutes into Ymax a result obtained by adding the maximum sell amount of the targeted sell data to Ymax, and substitutes into Ymin a result obtained by adding the minimum sell amount of the targeted sell data to Ymin (S205). Subsequently, the sale confirmation processing unit 12 adopts, as the targeted sell data, sell data subsequent to the targeted sell data in the candidate sell data group (S206), and repeats step S204 and subsequent steps.

As a result, in the example of Figs. 13A and 13B, when 1300 kWh which is a sum of maximum sell amounts of the sell data dS1 and the sell data dS2 is substituted into Ymax, and 700 kWh which is a sum of minimum sell amounts thereof is substituted into Ymin, the determination in step S204 yields Yes to proceed to step S207. In other words, in the example of Figs. 13A and 13B, the amount of trade electric energy corresponding to the purchase summation x is allocated to the sell data dS1 and the sell data dS2.

Subsequently, the sale confirmation processing unit 12 substitutes into a variable z a result obtained by subtracting Ymin from the purchase summation x (S207). In other words, a buy amount lacking as a result of allocating the minimum sell amounts of the sell data dS1 and the sell data dS2 for the purchase summation x is substituted into z (hereinafter referred to as "unallocated amount z") . In the example of Figs. 13A and 13B, the unallocated amount z is 900 kWh - 300 kWh - 400 kWh = 200 kWh.

Subsequently, the sale confirmation processing unit 12 adopts sell data up to the targeted sell data (the sell data dS2 in the example of Figs. 13A and 13B) as an allocation range of the amount of trade electric energy equal to or more than the minimum sell amount (hereinafter referred to as "sell range R") (S208).

In steps S209 to S216 subsequent thereto, the sale confirmation processing unit 12 executes processing for allocating (distributing) the unallocated amount z to the sell data included in the sell range R.

In step S209, the sale confirmation processing unit 12 adopts the first sell data in the candidate sell data group as a processing target (hereinafter referred to as "targeted sell data"). Subsequently, the sale confirmation processing unit 12 substitutes the maximum sell amount of the targeted sell data into Ymax, and substitutes the minimum sell amount of the targeted sell data into Ymin (S210). Subsequently, the sale confirmation processing unit 12 substitutes into a variable Ymid a result obtained by subtracting Ymin from Ymax (S211). The variable Ymid is an unallocated sell amount of the targeted sell data.

Subsequently, the sale confirmation processing unit 12 determines whether Ymid is equal to or more than the unallocated amount z (S212). In a case where Ymid is less than the unallocated amount z (No in S212), the sale confirmation processing unit 12 sets Ymax as the amount of trade electric energy of the targeted sell data (S213). More specifically, the maximum sell amount of the targeted sell data is adopted as the amount of trade electric energy of the targeted sell data. Subsequently, the sale confirmation processing unit 12 substitutes into the unallocated amount z a result obtained by subtracting Ymid from the unallocated amount z (S214). Subsequently, the sale confirmation processing unit 12 adopts, as the targeted sell data, sell data subsequent to the targeted sell data in the candidate sell data group (S215), and repeats step S210 and subsequent steps. On the other hand, in a case where Ymid is equal to or more than the unallocated amount z (Yes in S212), the sale confirmation processing unit 12 sets a result obtained by adding the unallocated amount z to Ymin as the amount of trade electric energy of the targeted sell data (S216).

In the example of Figs. 13A and 13B, Ymid of the sell data dS1 is 800 kWh - 300 kWh = 500 kWh, which is equal to or more than the unallocated amount 200 kWh. Therefore, 300 kWh + 200 kWh = 500 kWh is set as the amount of trade electric energy of the sell data dS1.

In step S217 to S219 subsequent thereto, the sale confirmation processing unit 12 executes processing for setting the minimum sell amount as the amount of trade electric energy of each of the other pieces of sell data included in the sell range R.

In step S217, the sale confirmation processing unit 12 adopts, as the targeted sell data, sell data subsequent to the targeted sell data in the candidate sell data group. Subsequently, the sale confirmation processing unit 12 determines whether the targeted sell data is beyond the sell range R. In a case where the targeted sell data is not beyond the sell range R (No in S218), the sale confirmation processing unit 12 sets the minimum sell amount of the targeted sell data as the amount of trade electric energy of the targeted sell data (S219), and returns back to step S217.

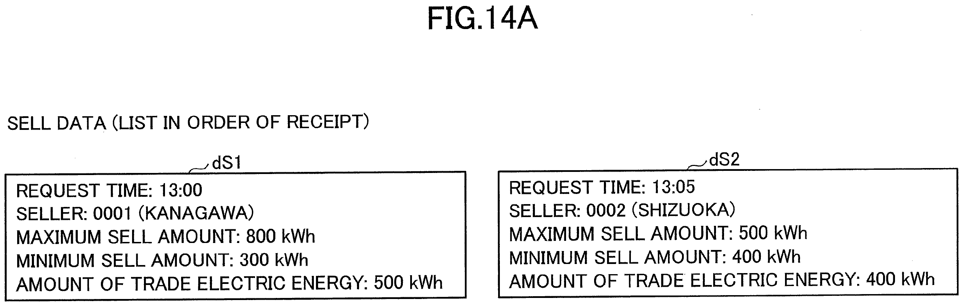

In the example of Figs. 13A and 13B, 400 kWh which is the minimum sell amount of the sell data dS2 is set as the amount of trade electric energy of the sell data dS2. As a result, each piece of sell data is as illustrated in Fig. 14A.

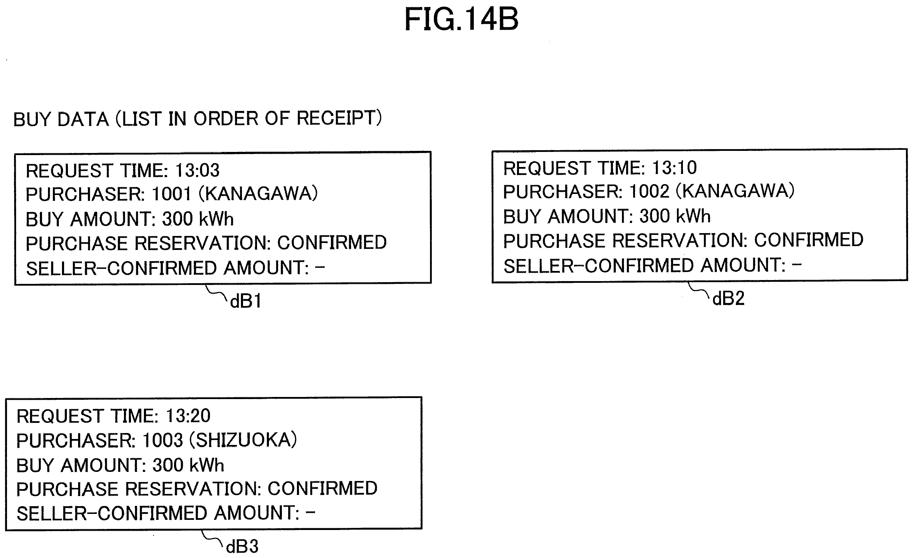

Figs. 14A and 14B are third drawings illustrating a data example of sell information and buy information, respectively, loaded to the memory. In Fig. 14A, the value of the amount of trade electric energy is recorded in each of the sell data dS1 and dS2.

In a case where the targeted sell data is beyond the sell range R (Yes in S218), the sale confirmation processing unit 12 records, into the block chain BC, the sale confirmation information corresponding to the sell data, in which a value is set in the amount of trade electric energy, in the candidate sell data group (S220). In the example of Figs. 11A and 11B, the sale confirmation information corresponding to the sell data dS1 and dS2 is recorded to the block chain BC at time t18 and time t19, respectively, in Fig. 5.

According to the processing of Fig. 12, the amount of trade electric energy can be fairly distributed to each sell information.

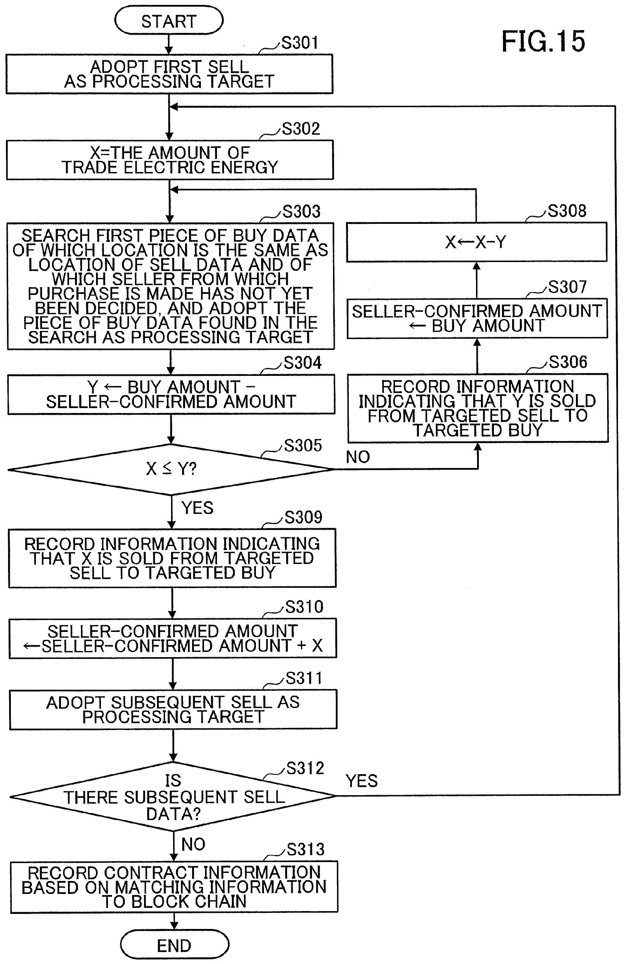

Fig. 15 is a flowchart for explaining an example of processing procedure of contract confirmation processing. For example, Fig. 15 is executed with regard to buy data and sell data concerning a trade period immediately after the start time (time t20 of Fig. 5) of the trade period. In other words, the processing procedure of Fig. 15 is executed at time t21 of Fig. 5.

In step S301, the contract generation unit 13 adopts, as a processing target (hereinafter referred to as "targeted sell data"), the first sell data of the sell data included in the sell range R. At time t21, the state of each sell data and buy data is as illustrated in Figs. 14A and 14B.

Subsequently, the contract generation unit 13 substitutes the amount of trade electric energy of the targeted sell data into the variable X (S302). The variable X is a variable for storing a remaining amount of the amount of trade electric energy of the targeted sell data (hereinafter referred to as "trade remaining amount").

Subsequently, the contract generation unit 13 searches, from the buy data group in which the purchase reservation is "confirmed" (hereinafter referred to as "candidate buy data group"), buy data of which location of the purchaser is the same as the location of the seller of the targeted sell data and of which seller-confirmed amount has not reached the buy amount, and adopts, as the processing target, the first buy data among the buy data found in the search (S303). In a case where no buy data is found in the search, the first buy data among the buy data of which location of the purchaser is closest to the location of the seller of the targeted sell data is adopted as the processing target. Hereinafter, the buy data adopted as the processing target will be referred to as the "targeted buy data".

Subsequently, the contract generation unit 13 substitutes, into the variable Y, a result obtained by subtracting the seller-confirmed amount of the targeted buy data from the buy amount of the targeted buy data (S304). In other words, the variable Y is a variable for storing the amount of shortage with respect to the buy amount in the targeted buy data.

Subsequently, the contract generation unit 13 compares the trade remaining amount X and the amount of shortage Y (S305). In a case where the trade remaining amount X is larger than the amount of shortage Y (No in S305), the contract generation unit 13 records, into the memory device 103, matching information indicating that the electric power corresponding to the amount of shortage Y is sold from the targeted sell data to the targeted buy data (S306). Subsequently, the contract generation unit 13 sets the value of the buy amount of the targeted buy data as the seller-confirmed amount of the targeted buy data (S307). As a result, all the sellers have been confirmed for the targeted buy data. Subsequently, the contract generation unit 13 substitutes, into the trade remaining amount X, a result obtained by subtracting the amount of shortage Y from the trade remaining amount X, and repeats step S303 and subsequent steps.

On the other hand, in a case where the trade remaining amount X is equal to or less than the amount of shortage Y in step S305 (Yes in S305), the contract generation unit 13 records, into the memory device 103, matching information indicating that the electric power corresponding to the trade remaining amount X is sold from the targeted sell data to the targeted buy data (S309) . Subsequently, the contract generation unit 13 substitutes, into the seller-confirmed amount of the targeted buy data, a result obtained by adding the trade remaining amount X to the seller-confirmed amount of the targeted buy data (S310). Subsequently, the contract generation unit 13 adopts, as the processing target, sell data subsequent to the targeted sell data in the sell range R (S311). In a case where there is subsequent sell data (Yes in S312), the subsequent sell data is adopted as the targeted sell data, and step 302 and subsequent steps are repeated.

Therefore, in steps S301 to S312, for each piece of sell data, the buy data to which the electricity is to be sold is determined on the basis of the geographical closeness between the seller and the purchaser. Alternatively, for each piece of buy data, sell data from which the electricity is purchased may be determined.

When steps up to step S311 have been executed on all the sell data in the sell range R in the order of receipt (No in S312), the contract generation unit 13 records, into the block chain BC, the contract information based on each piece of matching information recorded in step S306 or S309 (S313).

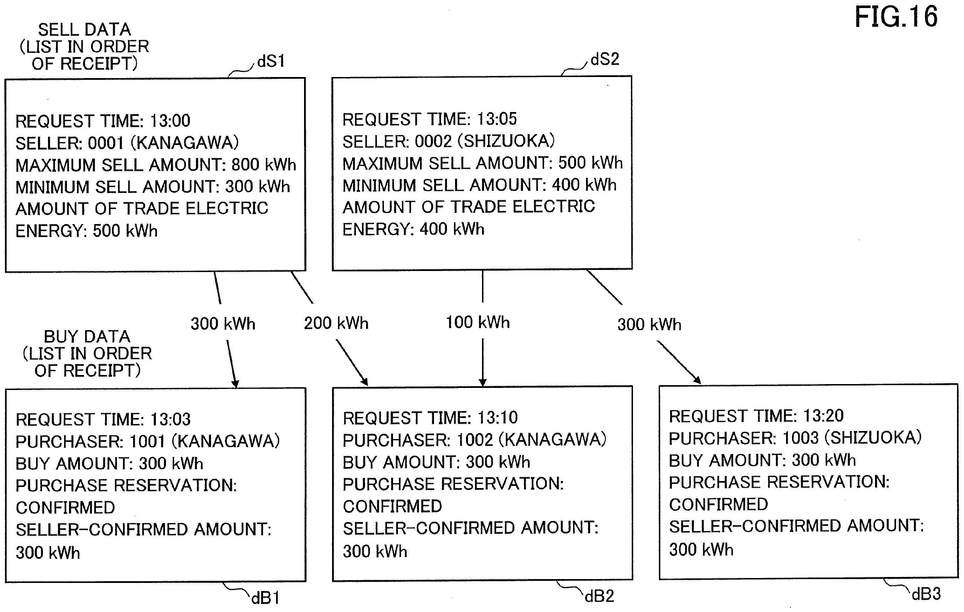

For example, in the example of Figs. 14A and 14B, matching (association) is made as illustrated in Fig. 16. Fig. 16 is a drawing illustrating an example of a matching result of sells and buys. In Fig. 16, each arrow from sell data to buy data indicates matching information. More specifically, Fig. 16 shows that, from the amount of trade electric energy (500 kWh) of the sell data dS1, 300 kWh is sold to the buy data dB1, and 200 kWh is sold to the buy data dB2. From the amount of trade electric energy (400 kWh) of the sell data dS2, 100 kWh is sold to the buy data dB2, and 300 kWh is sold to the buy data dB2. As a result, the buy amounts of all the buy data are satisfied without excess or shortage.

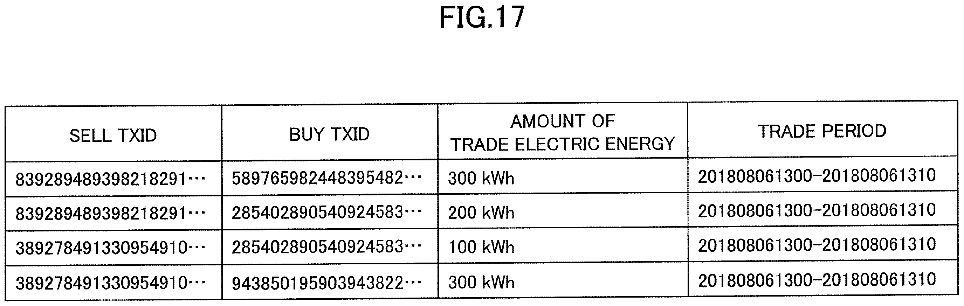

In this case, contract information as illustrated in Fig. 17 is recorded to the block chain BC. Fig. 17 is a drawing illustrating a configuration example of contract information in the block chain BC. In Fig. 17, one row (record) indicates a piece of contract information, and corresponds to an arrow in Fig. 16. As illustrated in Fig. 17, a piece of contract information includes a sell TXID, a purchase TXID, an amount of trade electric energy, a trade period, and the like. The sell TXID is a sell TXID of sell information. The purchase TXID is a purchase TXID of buy information matched with the sell information. The amount of trade electric energy is a trade amount of electric power between the sell information and the buy information (sale amount of electric power from the sell information to the buy information). The trade period is a period of trade concerning the trade amount.

An example of matching sell information and buy information in the order based on geographical closeness is shown in the above explanation. Alternatively, for example, matching may be made in other orders such as an order of receipt and the like.

Electric power may not be actually transferred between the matched consumers, and only monetary trade may be conducted. In other words, since power-saving by the DR trade may be achieved as a whole, the seller may save power equivalent to the sale amount (the amount of trade electric energy).

As described above, according to the present embodiment, since securing of electric power is guaranteed before the contract (matching) is made, the purchase with regard to each purchase request can be confirmed on the basis of the amount of newly sellable electric energy and the buy amount of each purchase request (buy information).

As a result, both of efficient electric power trade and securing of electric power before the power-saving request reply can be achieved, and for example, replies can be made to even a power-saving request that requires replies to be made in a short time. Therefore, electric power trade can be smoothly operated according to power-saving requests.

Hereinafter, a reference case to which the present embodiment is not applied will be explained. In this reference case, in the sell information and the buy information as shown in the present embodiment, matching is attempted to be completed before the reply deadline of the power-saving request for each piece of buy information.

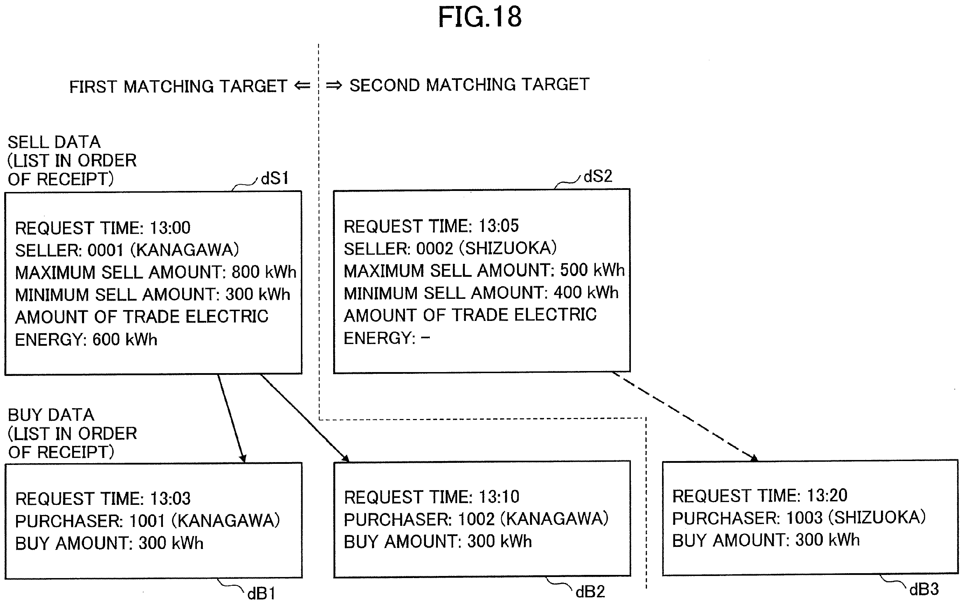

Fig. 18 is a drawing for explaining an example of confirmation processing of a contract in a case where a matching is made by a reply deadline.

As illustrated in Fig. 18, in this case, at the point in time when a piece of sell information (sell data dS1) and two pieces of buy information (buy data dB1 and dB2) are recorded in a block chain, the first matching is made in order to confirm a contract within the reply deadline. Thereafter, the second matching is made after a piece of sell information (sell data dS2) and a piece of buy information (buy data dB3) are added.

In the first matching, the electricity requested in two pieces of buy information (buy data dB1 and dB2) can be purchased from the first sell information (sell data dS1), and a contract information based on the two pieces of buy information and the sell information is registered to the block chain.

In the second matching, matching of newly added buy information (buy data dB3) is executed, but the availability of sell in the first sell information (sell data dS1) is only 200 kWh which falls short of 300 kWh, which is the buy amount of the buy data dB3, by 100 kWh. The availability of the second sell information (sell data dS2) is 500 kWh, but the minimum sell amount is 400 kWh. This means that the second sell information (sell data dS2) cannot sell 300 kWh which is the buy amount of the buy data dB3. Therefore, in order for the purchaser concerning the buy data dB3 to satisfy the power-saving request, the purchaser has to purchase 100 kWh extra electric power.

When the contract is made earlier in this manner, optimum buying and selling is unlikely to be conducted as a whole.

In the present embodiment, the matching device 10 is an example of an electric power trade apparatus. The purchase confirmation processing unit 11 is an example of a determination unit, an output unit. The sale confirmation processing unit 12 is an example of an allocation unit. The contract generation unit 13 is an example of an association unit.

## Claims

1. An electric power trade apparatus (10) comprising:
a determination unit (11) for determining whether it is possible to make a purchase concerning a purchase amount indicated in one or more purchase requests received from one or more respective purchasers of electric power having received a power-saving request, on the basis of the purchase amount and a sellable amount indicated in one or more sale requests received from one or more respective sellers of electric power, upon receiving the purchase requests;
an output unit (11) for transmitting information for enabling any given one of the purchasers to make a reply to the power-saving request upon determining that purchase concerning a corresponding one of the purchase requests is possible; and
an allocation unit (12) for allocating, to the one or more sale requests, respective sale amounts a sum of which is equal to the purchase amount, on the basis of the purchase amount and the sellable amount after the information is transmitted.

2. The electric power trade apparatus (10) according to claim 1, wherein the allocation unit (12) allocates the sale amounts to the sale requests after a reply deadline to the power-saving request.

3. The electric power trade apparatus (10) according to claim 1 or 2, wherein the one or more purchase requests are a plurality of purchase requests, and the purchase amount is a total purchase amount indicated in the plurality of purchase requests,
wherein the determination unit (11) determines whether it is possible to make a purchase with regard to each of the purchase requests,
the output unit (11) transmits the information for enabling the reply separately for each of the purchase requests for which purchase is determined to be possible,
the allocation unit (12) allocates, to the one or more sale requests, the respective sale amounts a sum of which is equal to the total purchase amount, on the basis of the total purchase amount and the sellable amount of the one or more sale requests, and
the electric power trade apparatus further comprises an association unit (13) for creating data indicative of matches between the sale requests and the purchase requests on the basis of the allocating.

4. The electric power trade apparatus (10) according to any one of claims 1 to 3, wherein the purchase requests and the sale requests are recorded to a block chain, and
the output unit (11) adds, to the block chain, the information for enabling the purchaser to make the reply to the power-saving request.

5. An electric power trade method comprising:
determining whether it is possible to make a purchase concerning a purchase amount indicated in one or more purchase requests received from one or more respective purchasers of electric power having received a power-saving request, on the basis of the purchase amount and a sellable amount indicated in one or more sale requests received from one or more respective sellers of electric power, upon receiving the purchase requests;
transmitting information for enabling any given one of the purchasers to make a reply to the power-saving request upon determining that purchase concerning a corresponding one of the purchase requests is possible, and
allocating, to the one or more sale requests, respective sale amounts a sum of which is equal to the purchase amount, on the basis of the purchase amount and the sellable amount after the information is transmitted.

6. The electric power trade method according to claim 5, wherein the allocating further comprises allocating the sale amounts to the sale requests after a reply deadline to the power-saving request.

7. The electric power trade method according to claim 5 or 6, wherein the one or more purchase requests are a plurality of purchase requests, and the purchase amount is a total purchase amount indicated in the plurality of purchase requests,
wherein the determining comprises determining whether it is possible to make a purchase with regard to each of the purchase requests,
the transmitting comprises transmitting the information for enabling the reply separately for each of the purchase requests for which purchase is determined to be possible, and
the allocating comprises allocating, to the one or more sale requests, the respective sale amounts a sum of which is equal to the total purchase amount, on the basis of the total purchase amount and the sellable amount of the one or more sale requests,
wherein the electric power trade method further comprises creating data indicative of matches between the sale requests and the purchase requests on the basis of the allocating.

8. A program for causing a computer to execute processing comprising:
determining whether it is possible to make a purchase concerning a purchase amount indicated in one or more purchase requests received from one or more respective purchasers of electric power having received a power-saving request, on the basis of the purchase amount and a sellable amount indicated in one or more sale requests received from one or more respective sellers of electric power, upon receiving the purchase requests;
transmitting information for enabling any given one of the purchasers to make a reply to the power-saving request upon determining that purchase concerning a corresponding one of the purchase requests is possible; and
allocating, to the one or more sale requests, respective sale amounts a sum of which is equal to the purchase amount, on the basis of the purchase amount and the sellable amount after the information is transmitted.

9. The program according to claim 8, wherein the allocating further comprises allocating the sale amounts to the sale requests after a reply deadline to the power-saving request.

10. The program according to claim 8 or 9, wherein the one or more purchase requests are a plurality of purchase requests, and the purchase amount is a total purchase amount indicated in the plurality of purchase requests,
wherein the determining comprises determining whether it is possible to make a purchase with regard to each of the purchase requests,
the transmitting comprises transmitting the information for enabling the reply separately for each of the purchase requests for which purchase is determined to be possible,
the allocating comprises allocating, to the one or more sale requests, the respective sale amounts a sum of which is equal to the total purchase amount, on the basis of the total purchase amount and the sellable amount of the one or more sale requests, and
wherein the program further causes the computer to execute processing comprising creating data indicative of matches between the sale requests and the purchase requests on the basis of the allocating.
